# EUROPEAN PATENT APPLICATION

(11) **EP 4 814 567 A1**
(43) Date of publication of application: **30.09.2026**
(21) Application number: 25187801.3
(22) Date of filing: 07.07.2025
(51) Int. Cl.: G02B 27/01, G06F 3/01, G06F 3/147

(54) **CONTROL DEVICE, DISPLAY SYSTEM, PROGRAM, AND CONTROL METHOD**

(30) Priority: 26.03.2025 JP 2025050899
(71) Applicant: FUJIFILM Business Innovation Corp., Minato-ku Tokyo (JP)
(72) Inventor: KATO, Ryoma, Yokohama-shi, Kanagawa (JP); KANEKO, Atsuki, Yokohama-shi, Kanagawa (JP); SASAKI, Hirotake, Ebina-shi, Kanagawa (JP)
(74) Representative: Becker Kurig & Partner Patentanwälte mbB

(57) **Abstract**

A control device includes a processor, in which the control device controls a display device that displays an image appearing within a field of view of an operator who performs work on a work target existing in a real space, and the processor is configured to display a transition reception display that is a display for receiving, from the operator, an indication of a transition of the operator to work in a different order and limit reception of the transition reception display in a case where the operator is performing the work on the work target.

## Description

### BACKGROUND OF THE INVENTION

### (i) Field of the Invention

The present invention relates to a control device, a display system, a program, and a control method.

### (ii) Description of Related Art

JP2024-143129A discloses a work support system that displays, on a display unit, a video for navigating a work procedure and a position of a work target to an operator.

### SUMMARY OF THE INVENTION

In a case where an image appears within a field of view of an operator who performs work on a work target existing in a real space, the operator can perform the work on the work target while referring to the image.

Here, a case where a reception display, which is a display for receiving an indication of a transition to work in a different order from an operator, is displayed within a field of view of the operator is assumed. In addition, a case where the reception display is displayed in a state in which an indication of the transition to the work in a different order can be received regardless of the operation of the operator is assumed.

In this case, even in a case where the operator is performing work on the work target, an indication of the transition to the work in a different order may be received by the transition reception display. In this case, it becomes difficult for the operator to continue the work on the work target, and the work efficiency of the operator is decreased.

An object of the present invention is to suppress a decrease in the work efficiency of the operator, as compared with a case where a reception display is displayed in a state where reception of the transition to work in a different order is not limited in a case where the operator is performing work on the work target.

According to a first aspect of the present invention, there is provided a control device including a processor, in which the control device controls a display device that displays an image appearing within a field of view of an operator who performs work on a work target existing in a real space, and the processor is configured to display a transition reception display that is a display for receiving, from the operator, an indication of a transition of the operator to work in a different order and limit reception of the transition reception display in a case where the operator is performing the work on the work target.

According to a second aspect of the present invention, in the control device according to the first aspect, the processor may be configured to set the transition reception display to a state of low visibility for the operator in a case where the operator is performing the work on the work target, as compared with a case where the operator is not performing the work.

According to a third aspect of the present invention, in the control device according to the second aspect, the processor may be configured to not display the transition reception display in a case where the operator performs the work on the work target.

According to a fourth aspect of the present invention, in the control device according to the first aspect, the processor may be configured to set the transition reception display to a state of low operability for the operator in a case where the operator is performing the work on the work target, as compared with a case where the operator is not performing the work.

According to a fifth aspect of the present invention, in the control device according to any one of the first to fourth aspects, the processor may be configured to display the transition reception display in a state in which the reception is not limited in a case where the operator is not performing the work on the work target.

According to a sixth aspect of the present invention, in the control device according to the fifth aspect, the processor may be configured to display the transition reception display in a state in which the reception is not limited in a case where the operator performs a first operation that is a predetermined operation.

According to a seventh aspect of the present invention, in the control device according to the sixth aspect, the processor may be configured to set an operation that differs depending on the operator as the first operation, and display the transition reception display in a state in which the reception is enabled in a case where the operator performs the first operation.

According to an eighth aspect of the present invention, in the control device according to the sixth aspect, the processor may be configured to set an operation that differs depending on a content of the work as the first operation, and display the transition reception display in a state in which the reception is enabled in a case where the operator performs the first operation.

According to a ninth aspect of the present invention, in the control device according to any one of the first to eighth aspects, the processor may be configured to display at least a part of the transition reception display in an overlapping manner on a body of the operator.

According to a tenth aspect of the present invention, in the control device according to the ninth aspect, the processor may be configured to change a mode of the transition reception display according to a feature of the body of the operator.

According to an eleventh aspect of the present invention, in the control device according to the tenth aspect, the transition reception display may be a display for performing the reception in a case where the operator performs a second operation that is an operation of moving the body, and the processor may be configured to change a size of the transition reception display according to a size of the body of the operator.

According to a twelfth aspect of the present invention, there is provided a display system including a display device that displays an image appearing in a field of view of a subject, and a control device that controls the display device, in which the control device includes a configuration of the control device according to any one of the first to eleventh aspects.

According to a thirteenth aspect of the present invention, there is provided a program executed by a computer that controls a display device that displays an image appearing within a field of view of an operator who performs work on a work target existing in a real space, the program causing the computer to realize a function of displaying a transition reception display that is a display for receiving, from the operator, an indication of a transition of the operator to work in a different order and of limiting reception of the transition reception display in a case where the operator is performing the work on the work target.

According to a fourteenth aspect of the present invention, there is provided a control method including displaying a transition reception display that is a display for receiving, from an operator, an indication of a transition of the operator to work in a different order and limiting reception of the transition reception display in a case where the operator is performing the work on the work target.

According to the first aspect of the present invention, it is possible to suppress a decrease in the work efficiency of the operator, as compared with a case where a reception display is displayed in a state where reception of the transition to work in a different order is not limited in a case where the operator is performing work on the work target.

According to the second aspect of the present invention, it is possible to suppress the work on the work target from being hindered by the transition reception display, as compared with a case where the transition reception display is not set to a state of low visibility in a case where the operator is performing the work on the work target.

According to the third aspect of the present invention, it is possible to suppress the work on the work target from being hindered by the transition reception display, as compared with a case where the transition reception display is displayed in a case where the operator is performing the work on the work target.

According to the fourth aspect of the present invention, the reception through the transition reception display is suppressed at a timing that is not intended by the operator, as compared with a case where the transition reception display is not set to a state of low operability in a case where the operator is performing the work on the work target.

According to the fifth aspect of the present invention, the burden on the operator in a case where the operator responds to the transition reception display is reduced as compared with a case where the transition reception display is displayed in a state in which the reception is limited in a case where the operator is not performing the work on the work target.

According to the sixth aspect of the present invention, it is possible to display the transition reception display according to the operation of the operator.

According to the seventh aspect of the present invention, the burden on the operator in a case of responding to the transition reception display is reduced, as compared with a case where the same operation is set as the first operation regardless of the operator.

According to the eighth aspect of the present invention, the burden on the operator in a case of responding to the transition reception display is reduced, as compared with a case where the same operation is set as the first operation regardless of the content of the work.

According to the ninth aspect of the present invention, the burden on the operator in a case of responding to the transition reception display is reduced, as compared with a case where the transition reception display is displayed in a manner that does not overlap the body of the operator.

According to the tenth aspect of the present invention, the burden on the operator in a case of responding to the transition reception display is reduced, as compared with a case where the mode of the transition reception display is not changed according to the feature of the body of the operator.

According to the eleventh aspect of the present invention, it is easy to receive the response to the transition reception display, as compared with a case where the size of the transition reception display is not changed according to the size of the body of the operator.

According to the twelfth, thirteenth, and fourteenth aspects of the present invention, it is possible to suppress a decrease in the work efficiency of the operator, as compared with a case where a reception display is displayed in a state where reception of the transition to work in a different order is not limited in a case where the operator is performing work on the work target.

### BRIEF DESCRIPTION OF THE DRAWINGS

Exemplary embodiment(s) of the present invention will be described in detail based on the following figures, wherein:
FIG. 1 is a diagram showing an overall configuration of an information processing system according to the present exemplary embodiment;
FIG. 2 is a diagram showing a configuration of a management server;
FIG. 3 is a diagram showing a hardware configuration of an individual device;
FIG. 4 is a diagram showing an example of a work target on which work is performed by an operator;
FIG. 5 is a diagram showing a screen displayed by a display device in a case where an operator standing at a location indicated by a reference symbol 3A in FIG. 4 looks in a direction indicated by an arrow 3B;
FIG. 6 is a diagram showing a work management database registered in an information storage unit;
FIG. 7 is a diagram showing an object corresponding image displayed within a field of view of an operator;
FIG. 8 is a diagram showing an example of a screen displayed in a case where an operator performs work on a work target;
FIGS. 9A and 9B are diagrams showing display examples in which the operability of the transition reception display is low;
FIGS. 10A and 10B are diagrams showing display examples of transition reception displays changed according to features of a body of the operator; and
FIGS. 11A and 11B are diagrams showing operation examples of the operator in a case of responding to the transition reception display.

### DETAILED DESCRIPTION OF THE INVENTION

An exemplary embodiment of the present invention will be described below with reference to the accompanying drawings.

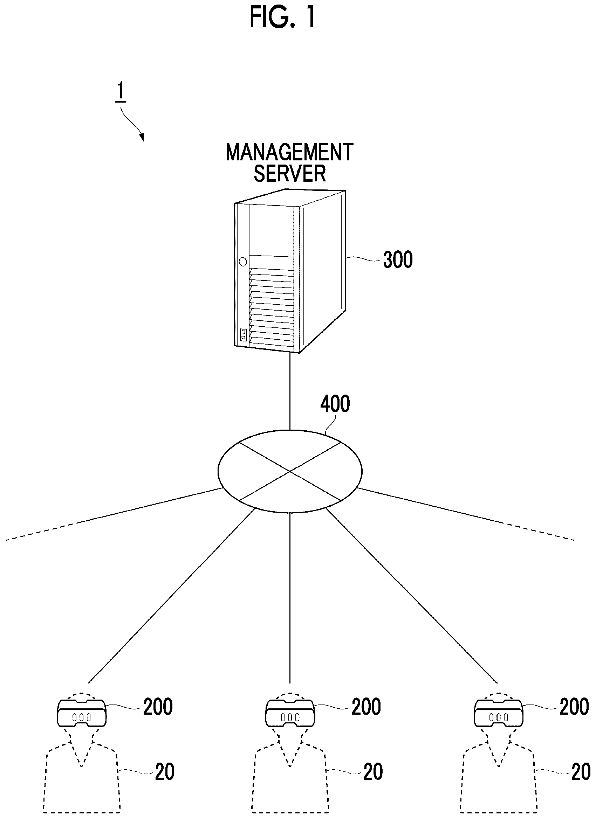

FIG. 1 is a diagram showing an overall configuration of an information processing system 1 according to the present exemplary embodiment.

The information processing system 1 is provided with a management server 300. Further, the information processing system 1 is provided with individual devices 200 prepared to correspond to each of operators 20. The individual device 200 is a glasses-type device and is worn on a head of the operator 20.

A plurality of individual devices 200 are provided according to the number of operators 20.

The individual device 200 displays an image within a field of view of the operator 20. Accordingly, the operator 20 visually recognizes the image. In addition, the operator 20 visually recognizes the surroundings of the operator 20 through the individual device 200.

Each of the individual devices 200 is connected to the management server 300 through a communication line 400. The communication line 400 may be a wired communication line or a wireless communication line.

### [Configuration of Management Server 300]

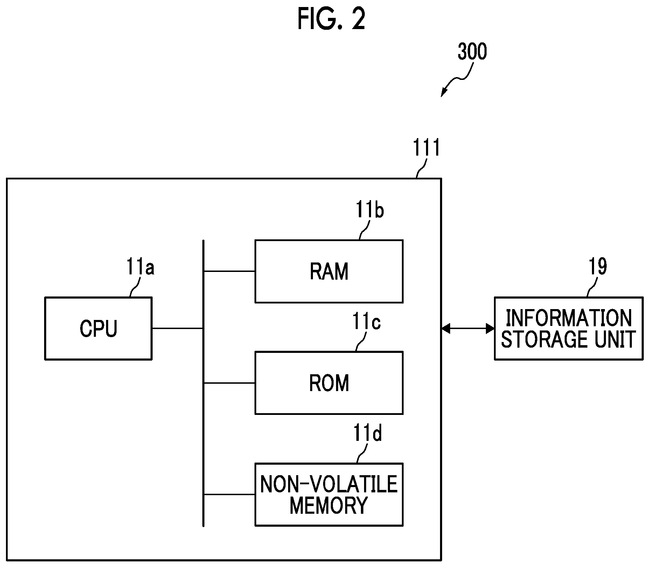

FIG. 2 is a diagram showing a configuration of the management server 300. The management server 300 is realized by a computer.

The management server 300 includes an arithmetic processing unit 111 that executes digital arithmetic processing according to a program, and an information storage unit 19 that stores information.

The information storage unit 19 is realized by an existing information storage device. The information storage unit 19 is configured by, for example, a hard disk drive (HDD), a semiconductor memory, a magnetic tape, or the like.

The arithmetic processing unit 111 is provided with a CPU 11a which is an example of a processor.

In addition, the arithmetic processing unit 111 is provided with a RAM 11b used as a work memory or the like of the CPU 11a and a ROM 11c in which programs or the like executed by the CPU 11a are stored.

Further, the arithmetic processing unit 111 is provided with a non-volatile memory 11d that is configured to be rewritable and can hold data even in a case where power supply is interrupted.

The non-volatile memory 11d is configured by, for example, an SRAM or a flash memory that is backed up by a battery. The information storage unit 19 stores various types of information such as a program executed by the arithmetic processing unit 111.

In the present exemplary embodiment, the CPU 11a provided in the arithmetic processing unit 111 reads the program stored in the ROM 11c or the information storage unit 19, and thus various types of processing performed by the management server 300 are executed.

The program executed by the CPU 11a can be provided to the management server 300 via a recording medium.

Examples of the recording medium include a magnetic recording medium such as a magnetic tape or a magnetic disk. Examples of the recording medium also include an optical recording medium such as an optical disc.

Examples of the recording medium also include a magneto-optical recording medium. Examples of the recording medium also include a semiconductor memory.

Further, the program to be executed by the CPU 11a may be provided to the management server 300 by using communication means such as the Internet.

### [Configuration of Individual Device]

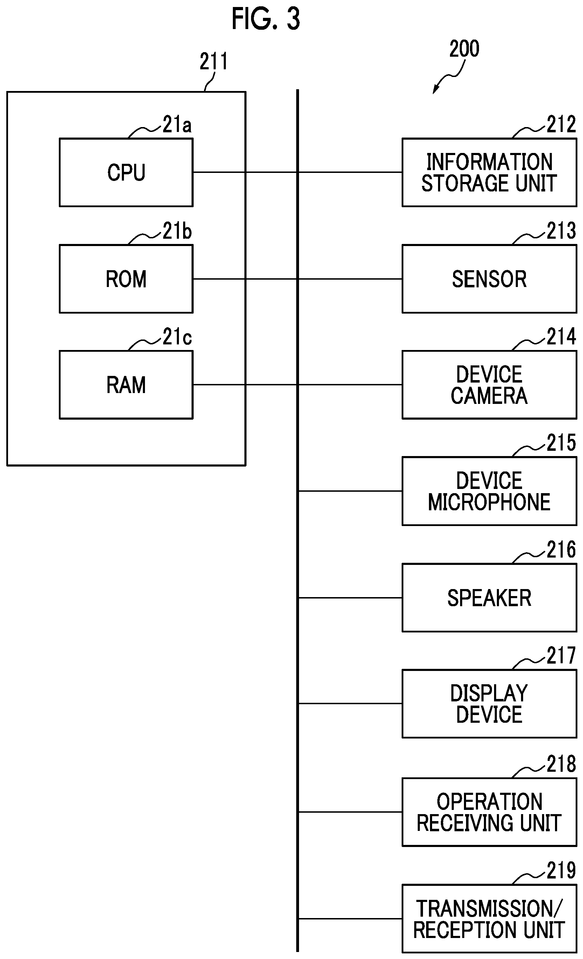

FIG. 3 is a diagram showing a hardware configuration of the individual device 200.

The individual device 200 includes a control device 211, an information storage unit 212, a sensor 213, a device camera 214, and a device microphone 215. The individual device 200 further includes a speaker 216, a display device 217, an operation receiving unit 218, and a transmission/reception unit 219.

The control device 211 is provided with a CPU 21a as an example of a processor.

In addition, the control device 211 is provided with a RAM 21c used as a work memory or the like of the CPU 21a, and a ROM 21b in which programs or the like executed by the CPU 21a are stored.

The information storage unit 212 is realized by an existing information storage device, such as a semiconductor memory.

Examples of the sensor 213 include a GPS sensor, a direction sensor, an acceleration sensor, and a gyro sensor. In addition, an example of the sensor 213 is light detection and ranging (LiDAR). In LiDAR, detection and distance measurement are performed using light.

In a case where the LiDAR is provided, a distance between the individual device 200 and a surrounding object located around the individual device 200 can be specified. In addition, in a case where the LiDAR is provided, a positional relationship between the individual device 200 and the surrounding object can be specified.

In the present exemplary embodiment, a current position of the individual device 200 or the orientation of the individual device 200 can be specified by referring to the output from the sensor 213. In addition, as described above, the distance between the individual device 200 and the surrounding object and the positional relationship between the individual device 200 and the surrounding object can be specified by referring to the output from the sensor 213.

The device camera 214 is a camera that images the surroundings of the individual device 200.

The device camera 214 faces a forward direction of the operator 20 in a state in which the individual device 200 is worn by the operator 20, and images the forward direction. In other words, the device camera 214 faces a direction where the operator 20 faces and images a front direction of the operator 20. The device camera 214 acquires a video within the field of view of the operator 20.

The device microphone 215 acquires a voice of the operator 20 to generate voice information.

The speaker 216 outputs sound or a voice and performs notification processing to the operator 20 to which the individual device 200 is worn.

The display device 217 is a so-called display and displays various types of information. In a state in which the individual device 200 is worn by the operator 20, the display device 217 is disposed in front of the operator 20.

In the present exemplary embodiment, the video obtained by the device camera 214 is displayed on the display device 217. In a state in which the individual device 200 is worn by the operator 20, the display device 217 displays a video showing a state in front of the operator 20.

In the present exemplary embodiment, the operator 20 visually recognizes the real space located in front of the operator 20 by referring to the video displayed on the display device 217.

The operation receiving unit 218 is a functional unit that receives an operation from a user. The operation receiving unit 218 is configured by, for example, a switch or a touch panel.

The transmission/reception unit 219 is a functional unit that transmits and receives a command and data to and from an external device connected to the individual device 200 via a communication line. An example of the external device is the management server 300 described above.

In addition, the individual device 200 may be a transmissive individual device 200.

In the transmissive individual device 200, a transparent display device 217 that allows the operator 20 to visually recognize the area behind the display device 217 is installed as the display device 217.

More specifically, in this case, a transparent display panel is installed in the display device 217. The operator 20 can visually recognize a situation behind the display panel through the display panel.

In this case, the operator 20 visually recognizes the area behind the display device 217 through the display device 217. In other words, the operator 20 visually recognizes the area in front of the operator 20 through the display device 217.

In the transmissive individual device 200, the operator 20 visually recognizes the real space located behind the display device 217 and the image displayed on the display device 217 through the display device 217.

The program executed by the CPU 21a can be provided to the individual device 200 via a recording medium.

Examples of the recording medium include a magnetic recording medium such as a magnetic tape or a magnetic disk. Examples of the recording medium also include an optical recording medium such as an optical disc.

Examples of the recording medium also include a magneto-optical recording medium. Examples of the recording medium also include a semiconductor memory.

In addition, the program executed by the CPU 21a may be provided to the individual device 200 by using the communication means such as the Internet.

The individual device 200 is not limited to the glasses-type individual device 200, and other examples thereof include a smartphone and a tablet terminal.

All of the glasses-type individual device 200, the smartphone, the tablet terminal, and the like are devices that can be carried by the operator 20.

Each of the smartphone and the tablet terminal is also provided with the display device 217 and the device camera 214. The operator 20 can visually recognize the area in front of the operator 20 by referring to the video that is captured by the device camera 214 and that is displayed on the display device 217.

In other words, in this case, the operator 20 can visually recognize a space that is located in front of the operator 20 and is located behind the smartphone or the tablet terminal by referring to the display device 217 that is provided in the smartphone or the tablet terminal disposed in front of the operator 20.

In the present exemplary embodiment, as will be described later, various types of information are notified to the operator 20 who is a user, via the individual device 200. The present invention is not limited to the glasses-type individual device 200, and such a notification can be performed even in a case where a smartphone or a tablet terminal is used.

In the present exemplary embodiment, it can be said that a display system is configured by the display device 217 provided in the individual device 200 and the control device 211 that controls the display device 217.

### [Description of Processing Executed by Individual Device]

In the following description, a case where the individual device 200 is worn by the operator 20 who performs work on a work target existing in the real space will be described as an example. In this case, an image displayed by the display device 217 appears within the field of view of the operator 20 who performs the work on the work target existing in the real space.

In the present exemplary embodiment, the display control on the display device 217 is performed by the CPU 21a provided in the control device 211 which is an example of a processor. As a result, the image appears within the field of view of the operator 20.

The display control on the display device 217 is not limited to the CPU 21a provided in the control device 211, and may be performed by, for example, the CPU 11a provided in the management server 300 shown in FIG. 2.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

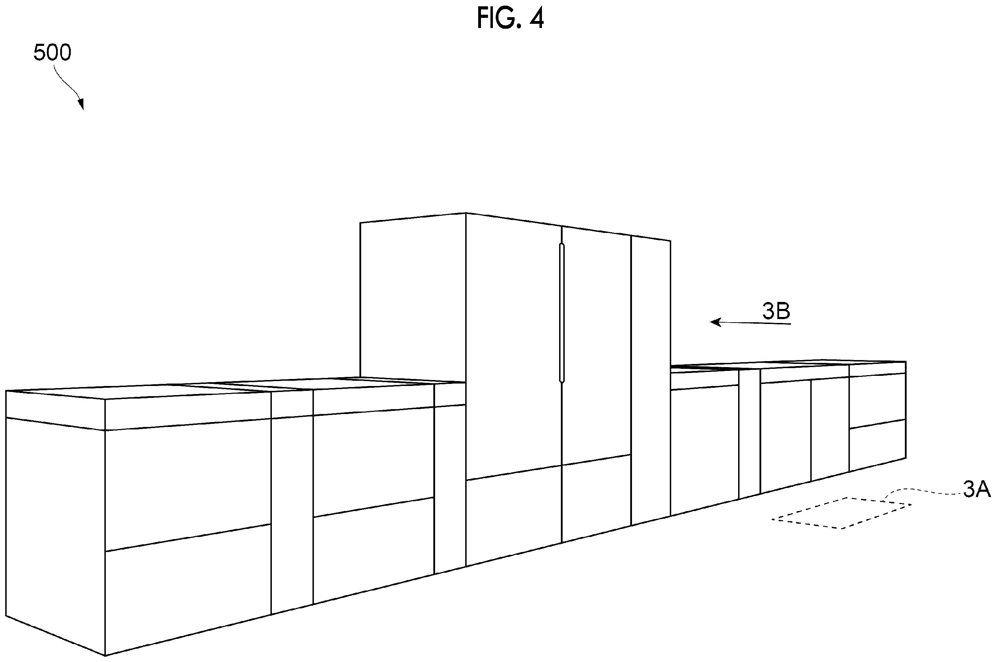

FIG. 4 is a diagram showing an example of a work target on which work is performed by the operator 20.

A work target 500 shown in FIG. 4 is an image forming apparatus that forms an image on a recording medium such as paper.

In the present exemplary embodiment, the operator 20 performs the work on the work target 500 in order in a state in which the individual device 200 is worn on the head of the operator 20.

In the following, a case where the work target 500 is an image forming apparatus will be described as an example, but the work target 500 is not particularly limited.

Examples of the work target 500 also include devices and apparatuses used in other industrial fields. For example, a device or an apparatus in the medical field, a transportation device, and the like are also examples of the work target 500. In addition, the work target 500 is not limited to a device or an apparatus, and examples thereof also include a structure that does not move, such as a bridge, a road, and a building.

In addition, the work target 500 is not limited to a finished product, and also includes a manufactured product that is to be assembled and manufactured.

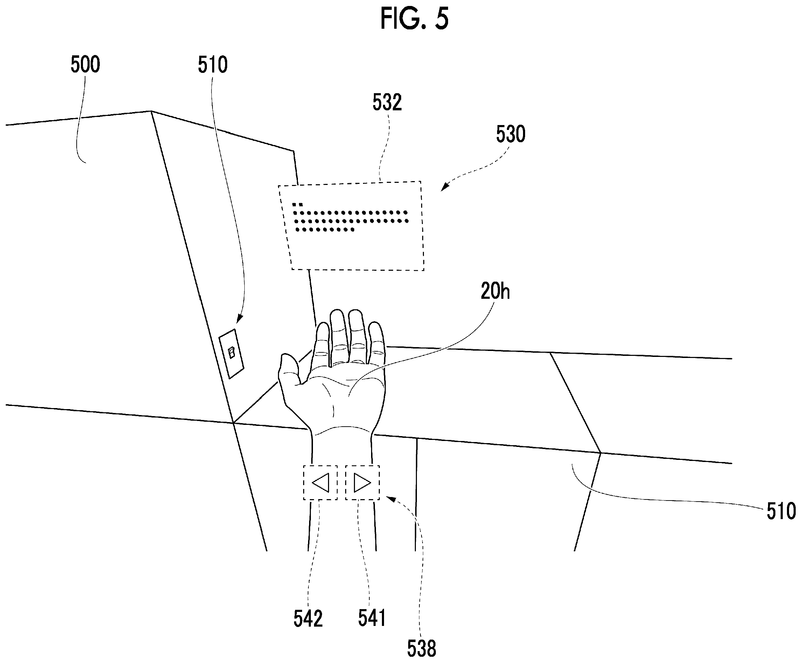

FIG. 5 is a diagram showing a screen displayed by the display device 217 in a case where the operator 20 standing at a location indicated by a reference symbol 3A in FIG. 4 looks in a direction indicated by an arrow 3B.

In each of the following drawings, images corresponding to objects existing in the real space among the images displayed by the display device 217 are displayed by solid lines.

In addition, in the image displayed by the display device 217, images corresponding to objects that do not exist in the real space are displayed with broken lines on an outer peripheral edge thereof.

In the actual display on the individual device 200, the outer peripheral edge is displayed with a solid line instead of a broken line.

In the present exemplary embodiment, images corresponding to objects that do not exist in the real space are displayed in an overlapping manner on the real space by using augmented reality (AR).

In the example shown in FIG. 5, the work target 500 and a hand 20h of the operator 20 are displayed as the image corresponding to the object existing in the real space.

In the present exemplary embodiment, as shown in FIG. 5, a corresponding image 530 corresponding to the work on the work location 510 is displayed in a form associated with the work location 510 or the hand 20h of the operator 20.

The "work location 510" refers to a location of the work target 500 where the work is performed by the operator 20.

The CPU 21a displays a work content image 532, which is an image representing the work content, as one of the corresponding images 530. The work content image 532 may be a still image or a video.

The CPU 21a displays the work content image 532 so that the work content image 532 is visible in a form associated with the work location 510 visually recognized by the operator 20 via the individual device 200.

Accordingly, in the present exemplary embodiment, the work content image 532 is displayed so that the work content image 532 is visible in a form located near the work location 510.

Further, the CPU 21a displays the transition reception display 538 as the corresponding image.

In the present exemplary embodiment, the CPU 21a displays the transition reception display 538 in a case where the operator 20 is not performing the work on the work target 500. In other words, FIG. 5 shows a screen displayed in a case where the operator 20 is not performing the work on the work target 500.

The transition reception display 538 will be described later.

In the example shown in FIG. 5, a plurality of work locations 510 are present.

In this display example, the CPU 21a displays the work content image 532 in a form associated with one work location 510 where the work is performed by the operator 20, among the work locations 510.

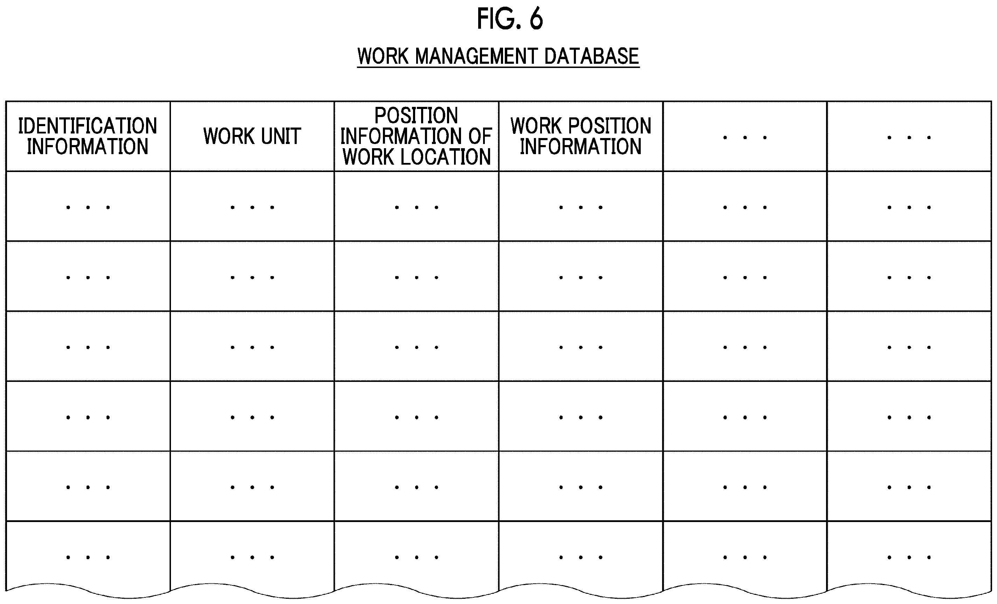

FIG. 6 is a diagram showing a work management database registered in the information storage unit 212.

In the present exemplary embodiment, the work management database shown in FIG. 6 is registered in the information storage unit 212 shown in FIG. 3.

In the present exemplary embodiment, each time one work by the operator 20 is ended or each time the work of one work unit by the operator 20 is ended, the CPU 21a refers to the work management database and specifies the next work or the next work unit.

In the work management database, information on the work that the operator 20 is to perform in sequence is arranged in order from the top, in the order in which the work is to be performed.

In the work management database, identification information for identifying each work is registered for each work. This identification information consists of, for example, sequential numbers.

Further, in the work management database, the positional information of the work location 510 is registered for each work. Specifically, the position coordinates indicating which part of the work target 500 the work location 510 is located in are registered.

In the present exemplary embodiment, a specific location of the image forming apparatus, which is the work target 500, is set as the origin, and three-dimensional position coordinates with the specific location as the origin are registered as the positional information of the work location 510.

Further, information on a work unit to which each work belongs is registered for each work in the work management database.

Further, in the work management database, work position information, which is information on a place where the operator 20 is located in a case of performing the work, is registered for each work.

The work position information is also three-dimensional position coordinates with a specific location of the image forming apparatus, which is the work target 500, as the origin.

Further, although not shown, in the work management database, information on a member to be a target of the work is registered for each work. Specifically, information such as positional information of the member, coordinate values indicating positions of each part of the member, and movable range of the member is registered as the information on the member.

Although not shown, in the present exemplary embodiment, for example, a seal on which a two-dimensional code is printed is attached to an outer surface of the work target 500 existing in the real space.

The two-dimensional code is a recognition image, which is an image used in a case where the individual device 200 recognizes the presence of the work target 500.

The individual device 200 specifies the image forming apparatus which is the work target 500 based on the recognition image shown in the video obtained by the device camera 214 shown in FIG. 3.

The recognition images are attached to, for example, three locations of the work target 500. The recognition images are attached to the work target 500 in a state of being shifted from each other.

The CPU 21a of the individual device 200 specifies the positional relationship between the individual device 200 and the work target 500, based on the three recognition images shown in the video obtained by the device camera 214.

The CPU 21a of the individual device 200 recognizes the three recognition images to specify which of the device coordinate systems, which are the three-dimensional coordinate systems of the individual device 200, the work target 500 is located in.

In addition, in the information storage unit 212 of the individual device 200, the three-dimensional data of the image forming apparatus, which is the work target 500 existing in the real space, is registered in advance.

The CPU 21a of the individual device 200 specifies which of the device coordinate systems each of the parts of the image forming apparatus, which is the work target 500, is located in, based on the three recognition images shown in the video obtained by the device camera 214 and the three-dimensional data of the image forming apparatus.

In the above description, a case where the individual device 200 recognizes the position of the work target 500 using the recognition image attached to the work target 500 has been described as an example.

However, a method of causing the individual device 200 to recognize the position of the work target 500 is not limited thereto.

For example, the operator 20 may perform an operation of making the object corresponding image displayed within the field of view of the operator 20 visible in an overlapping manner on the work target 500 existing in the real space, so that the individual device 200 recognizes the position of the work target 500.

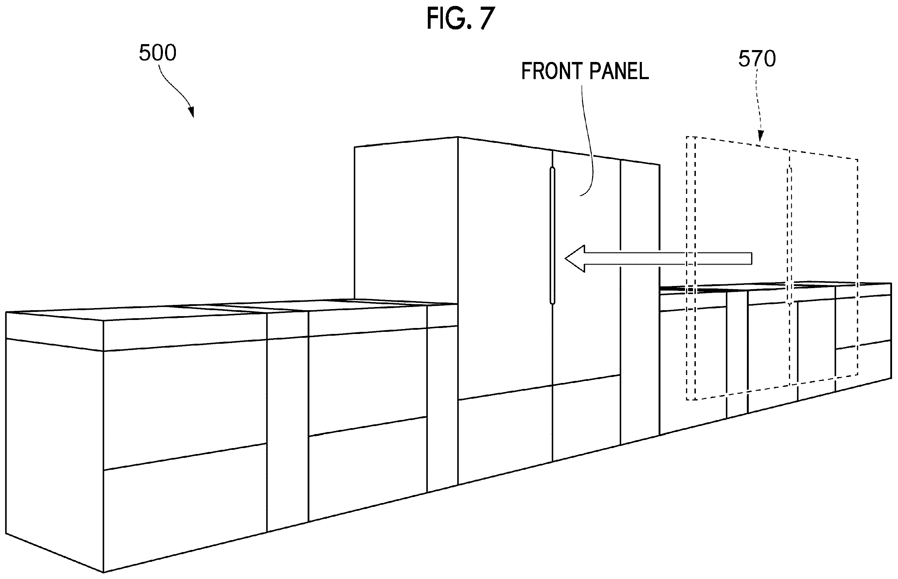

FIG. 7 is a diagram showing an object corresponding image 570 displayed within the field of view of the operator 20.

The object corresponding image 570 is displayed within the field of view of the operator 20 by the display device 217 shown in FIG. 3.

The operator 20 performs an operation of making the object corresponding image 570 appearing within the field of view of the operator 20 visible in an overlapping manner on the work target 500 existing in the real space.

The operator 20 performs an operation by moving the operator's head or by manually moving the object corresponding image 570, which appears to float in the air, so that the object corresponding image 570 is visible in an overlapping manner on the work target 500.

In a case where the object corresponding image 570 is an image representing the entire work target 500, the operator 20 performs an operation of making the entire object corresponding image 570 overlaps the entire work target 500.

In addition, in a case where the object corresponding image 570 is an image of a part of components that constitutes the work target 500, the operator 20 performs an operation of making the image of the part of the components visible in an overlapping manner on the part of the components existing in the real space.

In FIG. 7, the object corresponding image 570 is an image corresponding to a front panel that constitutes a part of the image forming apparatus. In this case, the operator 20 performs an operation of making the object corresponding image 570 visible in an overlapping manner on the front panel existing in the real space.

Then, in a case where the object corresponding image 570 is visible in an overlapping manner on the work target 500, the operator 20 performs the confirmation processing by operating the decision button or the like.

As a result, in this case as well, the CPU 21a of the individual device 200 can specify which of the device coordinate systems, which are the coordinate systems of the individual device 200, each part of the work target 500 is located in.

Thereafter, the individual device 200 is moved or the posture of the individual device 200 is changed. In this case, the CPU 21a corrects the information on the position of each unit obtained in the confirmation processing described above to obtain the latest information on the position of each unit.

Specifically, the CPU 21a of the individual device 200 corrects the information on the position of each unit based on the amount of movement of the individual device 200 and the amount of change of the posture of the individual device 200 to obtain the latest information on the position of each unit.

In a case where the processing described above is performed using the object corresponding image 570, the object corresponding image 570, which is an image representing the object and is generated based on the three-dimensional data, is displayed in the field of view of the operator 20 by the display device 217.

As described above, examples of the object corresponding image 570 include an image representing the entire work target 500 and an image representing a part of components that constitutes the work target 500.

In the present specification, the "three-dimensional data" refers to data having a coordinate value in an X direction, such as a width direction, a coordinate value in a Y direction, such as a depth direction, and a coordinate value in a Z direction, such as a height direction. In other words, the three-dimensional data refers to data consisting of three components.

### [Display of Transition Reception Display]

In the present exemplary embodiment, as shown in FIG. 5, the transition reception display 538, which is a display for receiving, from the operator 20, an indication of a transition to work in a different order, is displayed.

The transition reception display 538 is displayed in a case where the operator 20 is not performing the work on the work target 500. Then, in a case where the operator 20 responds to the transition reception display 538, the CPU 21a receives the transition to the next work in order. That is, the CPU 21a displays the transition reception display 538 in a case where the operator 20 is not performing the work on the work target 500 in a state in which the reception of the transition to the next work in order is not limited.

The transition reception display 538 includes a next button 541 that is a display for receiving the transition to the next work in order from the operator 20 as the work in a different order. In addition, the transition reception display 538 includes a back button 542 that is a display for receiving a transition to the previous work in order from the operator 20 as the work in a different order.

In this example, the next button 541 is displayed on a right side of the transition reception display 538, and the back button 542 is displayed on a left side of the transition reception display 538.

In a case where the transition reception display 538 is displayed, the operator 20 performs a predetermined operation on the transition reception display 538 to respond to the transition reception display 538.

In this example, the operator 20 responds to the transition reception display 538 by moving the operator's hand 20h.

More specifically, the operator 20 selects the next button 541 of the transition reception display 538 by moving the hand 20h to the right side. In this case, the CPU 21a receives an indication of the transition to the next work in order. Then, the CPU 21a displays the corresponding image 530, such as the work content image 532 corresponding to the next work in order.

In addition, the operator 20 selects the back button 542 of the transition reception display 538 by moving the hand 20h to the left side. In this case, the CPU 21a receives an indication of the transition to the previous work in order. Then, the CPU 21a displays the corresponding image 530, such as the work content image 532 corresponding to the previous work in order.

The operation of the operator 20 moving the hand 20h to the right side or the left side with respect to the transition reception display 538 is an example of a predetermined second operation.

The CPU 21a specifies that the operator 20 has responded to the transition reception display 538, based on the position of the hand 20h and the movement of the hand 20h appearing in the video obtained by the device camera 214 shown in FIG. 3.

The CPU 21a may display at least a part of the transition reception display 538 in a state where at least a part of the transition reception display 538 overlaps the body of the operator 20. In the present exemplary embodiment, the CPU 21a displays the transition reception display 538 in an overlapping manner on the hand 20h of the operator 20.

Here, the "display in an overlapping manner" includes an aspect in which coordinate values of the transition reception display 538 are located on an inner side of the hand 20h of the operator 20.

In addition, the "display in an overlapping manner" also includes a case where the coordinate values of the transition reception display 538 are set on a front side of the hand 20h of the operator 20. In this case as well, the operator 20 views the transition reception display 538 and the hand 20h in an overlapping manner.

In the present exemplary embodiment, since the transition reception display 538 is displayed in an overlapping manner on at least a part of the transition reception display 538 and the hand 20h of the operator 20, the burden on the operator 20 in a case of responding to the transition reception display 538 is reduced.

That is, in a case where the transition reception display 538 is displayed in a manner that does not overlap with the hand 20h, the operator 20 needs to perform an operation of moving the hand 20h to a position overlapping the transition reception display 538 and then moving the hand 20h to the right side or the left side to respond. On the other hand, since the transition reception display 538 is displayed in an overlapping manner on at least a part of the transition reception display 538 and the hand 20h of the operator 20, a distance over which the operator 20 moves the hand 20h is shortened, and the burden on the operator 20 is reduced.

### [Non-Display of Transition Reception Display]

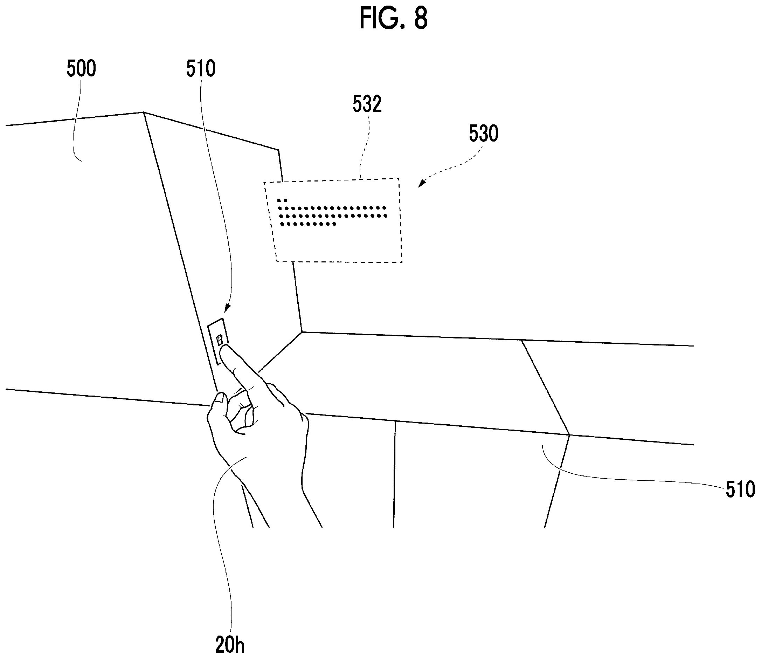

FIG. 8 is a diagram showing an example of a screen displayed in a case where the operator 20 performs the work on the work target 500.

In a case where the operator 20 performs the work on the work target 500, the CPU 21a displays the work content image 532. Accordingly, the operator 20 can perform the work on the work target 500 while referring to the work content image 532.

In addition, in the present exemplary embodiment, the CPU 21a does not display the transition reception display 538 in a case where the operator 20 performs the work on the work target 500. In other words, the CPU 21a does not display the transition reception display 538 (see FIG. 5) in a case where the operator 20 performs the work on the work target 500.

In a case where the transition reception display 538 is not displayed, the operator 20 cannot respond to the transition reception display 538. In this case, the CPU 21a does not receive an indication of the transition to the work in a different order. The fact that the transition reception display 538 is not displayed is an example of a state in which the transition reception display 538 is limited from receiving an indication of the transition to work in a different order.

Here, in a case where the operator 20 is performing the work on the work target 500 and the transition reception display 538 is displayed, a response to the transition reception display 538 may be made at a timing not intended by the operator 20. For example, in a case where the operator 20 moves the hand 20h according to the work, the response to the transition reception display 538 may be made by the movement of the hand 20h.

Then, the corresponding image 530 is changed to a corresponding image 530 corresponding to the work in a different order. For example, a position where the work content image 532, which is one of the corresponding images 530, is displayed is moved to the work location 510 of the work in a different order. In addition, the work content image 532 is changed to content corresponding to the work in a different order.

In this case, it is difficult for the operator 20 to continue the work while referring to the work content image 532 corresponding to the work performed on the work target 500.

In addition, in a case where the operator 20 is performing the work on the work target 500 and the transition reception display 538 is displayed, the work performed by the operator 20 may be hindered by the transition reception display 538. For example, in a case where the transition reception display 538 is displayed, the work location 510, the hand 20h for performing the work, and the like are difficult to visually recognize due to the transition reception display 538, and the work performed by the operator 20 may be hindered.

On the other hand, by not displaying the transition reception display 538 in a case where the operator 20 is performing the work on the work target 500, it is suppressed that the response to the transition reception display 538 is made at a timing not intended by the operator 20.

In addition, by not displaying the transition reception display 538 in a case where the operator 20 is performing the work on the work target 500, it is suppressed that the work performed by the operator 20 is hindered by the transition reception display 538.

### [Switching between Display and Non-Display of Transition Reception Display]

In the present exemplary embodiment, in a case where the operator 20 performs a predetermined operation, the CPU 21a displays the transition reception display 538. In addition, in a case where the operator 20 performs the predetermined operation, the CPU 21a determines that the operator 20 is not performing the work on the work target 500 and displays the transition reception display 538.

In the example shown in FIG. 5, in a case where the operator 20 performs an operation of facing the inner side of the hand 20h upward as the predetermined operation, the transition reception display 538 is displayed. The operation in which the inner side of the hand 20h of the operator 20 faces upward is an example of a first operation which is the predetermined operation.

In addition, in a case where the operator 20 does not perform the predetermined operation, the CPU 21a does not display the transition reception display 538. In addition, in a case where the operator 20 does not perform the predetermined operation, the CPU 21a determines that the operator 20 is performing the work on the work target 500 and does not display the transition reception display 538.

In the example shown in FIG. 8, the operator 20 performs an operation of turning off a power switch that is the work location 510 of the work target 500, with the hand 20h. That is, the operator 20 does not perform the predetermined operation in which the inner side of the hand 20h faces upward. Therefore, the CPU 21a does not display the transition reception display 538 (see FIG. 5).

The CPU 21a specifies that the operator has performed the predetermined operation based on the video obtained by the device camera 214 of the individual device 200 worn by the operator 20. In this example, the CPU 21a specifies that the operator has performed the operation of facing the inner side of the hand 20h upward based on the video obtained by the device camera 214.

Here, the CPU 21a may perform a different operation depending on the operator 20 as the first operation. The CPU 21a can set an operation of a different hand 20h as a predetermined operation, for example, depending on a dominant hand of the operator 20. In a case where the operator 20 is right-handed, the CPU 21a can set an operation of facing the inner side of the right hand, which is the dominant hand, upward as the first operation, and in a case where the operator 20 is left-handed, the CPU 21a can set an operation of facing the inner side of the left hand, which is the dominant hand, upward as the first operation.

In addition, the CPU 21a may consider an operation that differs depending on the content of the work on the work target 500 as the first operation.

For example, in a case where the work on the work target 500 is work performed by grasping the hand 20h, the CPU 21a can set an operation performed with the hand 20h in an open state as the first operation. In addition, for example, in a case where the work on the work target 500 is work performed with both the right and left hands 20h, the CPU 21a can set an operation performed with either the right or left hand 20h as the first operation.

In addition, the CPU 21a may specify whether or not the operator 20 is performing the work on the work target 500 by the following method.

For example, the CPU 21a may specify whether or not the operator 20 holds a tool used for the work on the work target 500. In this case, the CPU 21a determines whether or not the operator 20 holds the tool based on the video obtained by the device camera 214.

In addition, the CPU 21a may specify whether or not the operator 20 is performing the work on the work target 500 by the visual line of the operator 20. In this case, in a case where the visual line of the operator 20 is not directed to the work location 510 of the work target 500, the CPU 21a specifies that the operator 20 is not performing the work on the work target 500. In addition, for example, in a case where the visual line of the operator 20 is not fixed, the CPU 21a specifies that the operator 20 is not performing the work on the work target 500.

In addition, the CPU 21a may specify whether or not the operator 20 is performing the work on the work target 500 based on a position of the hand 20h of the operator 20. In this case, in a case where the distance between the hand 20h of the operator 20 and the work location 510 is greater than a predetermined distance, the CPU 21a specifies that the operator 20 is not performing the work on the work target 500.

### [Aspect of Reducing Visibility of Transition Reception Display]

In the example shown in FIG. 8, the transition reception display 538 is not displayed in a case where the operator 20 performs the work on the work target 500. However, the aspect of the transition reception display 538 in a case where the operator 20 is performing the work on the work target 500 is not limited thereto.

In a case where the operator 20 is performing the work on the work target 500, the CPU 21a can set the transition reception display 538 to a state of low visibility, as compared with a case where the operator 20 is not performing the work. The low visibility means that it is difficult for the operator 20 to visually recognize the transition reception display 538.

Examples of the state of low visibility include the following. In a case where the operator 20 is performing the work on the work target 500, the CPU 21a makes the size of the transition reception display 538 smaller than in a case where the operator 20 is not performing the work. In addition, in a case where the operator 20 is performing the work on the work target 500, the CPU 21a makes the brightness of the transition reception display 538 smaller than in a case where the operator 20 is not performing the work. In addition, in a case where the operator 20 is performing the work on the work target 500, the CPU 21a increases the transparency of the transition reception display 538, as compared with a case where the operator 20 is not performing the work. In addition, in a case where the operator 20 is performing the work on the work target 500, the CPU 21a displays the transition reception display 538 at a position away from an end of the display screen or the work location 510.

A plurality of these aspects may be combined.

In addition, the aspect in which the transition reception display 538 described above is not displayed is also an example of a state of low visibility.

By setting the transition reception display 538 to a state of low visibility in a case where the operator 20 is performing the work on the work target 500, the transition reception display 538 is less likely to obstruct the work location 510, the hand 20h performing the work, and the like. Accordingly, the work performed by the operator 20 is suppressed from being hindered by the transition reception display 538.

### [Aspect of Reducing Operability of Transition Reception Display]

The CPU 21a can set the transition reception display 538 to a state in which the operability of the operator 20 is low in a case where the operator 20 is performing the work on the work target 500, as compared with a case where the operator 20 is not performing the work. The low operability means that it is difficult for the operator 20 to respond to the transition reception display 538.

By setting the transition reception display 538 to the state in which the operability of the operator 20 is low in a case where the operator 20 is performing the work on the work target 500, it is suppressed that the response to the transition reception display 538 is made at a timing not intended by the operator 20.

As an aspect in which the operability of the transition reception display 538 is low, for example, an aspect in which a plurality of operations by the operator 20 are required in a case of responding to the transition reception display 538 can be exemplified.

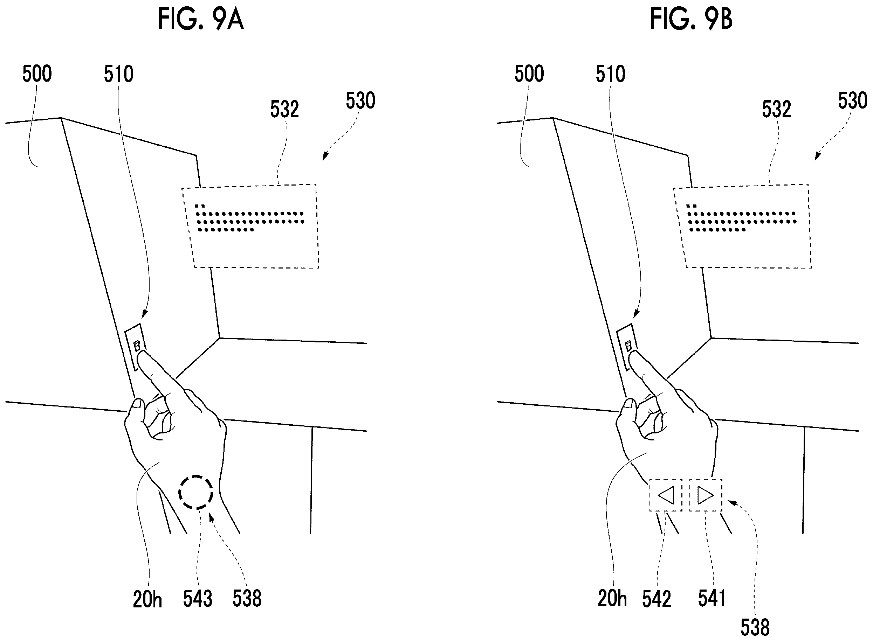

FIGS. 9A and 9B are diagrams showing display examples in which the operability of the transition reception display 538 is low.

In the example shown in FIG. 9A, the transition reception display 538 is configured by a single auxiliary button 543, and the next button 541 and the back button 542 are not displayed.

In a case of responding to the transition reception display 538, the operator 20 performs a predetermined operation on the auxiliary button 543. For example, the operator 20 performs an operation of pressing and selecting the auxiliary button 543 with a finger.

In a case where the operator 20 performs an operation on the auxiliary button 543, the CPU 21a changes the transition reception display 538 to a state of FIG. 9B. In the example shown in FIG. 9B, the transition reception display 538 includes the next button 541 and the back button 542.

In a case of responding to the transition reception display 538, the operator 20 performs a predetermined operation on the next button 541 or the back button 542. For example, the operator 20 performs an operation of moving the hand 20h (see FIG. 5) to the right side or the left side.

In a case where the operator 20 performs an operation on the next button 541 or the back button 542, the CPU 21a receives a response to the transition reception display 538.

In this example, in order for the operator 20 to respond to the transition reception display 538, it is necessary to perform two operations of an operation on the auxiliary button 543 and an operation on the next button 541 or the back button 542.

Accordingly, in a case where the operator 20 is performing the work on the work target 500, it is suppressed that the response to the transition reception display 538 is made at a timing not intended by the operator 20 due to the movement of the hand 20h related to the work.

In addition, examples of the state in which the operability is low include the following.

In a case where the operator 20 is performing work on the work target 500, the CPU 21a receives the response to the transition reception display 538 with a more complicated operation, as compared with a case where the operator 20 is not performing the work. For example, in a case where the operator 20 is not performing the work, the CPU 21a receives the response to the transition reception display 538 by the operation of moving the hand 20h to the right or the left as described above. On the other hand, in a case where the operator 20 is performing the work, the CPU 21a receives the response to the transition reception display 538 by the operation of moving to the right or the left while grasping the hand 20h.

In addition, in a case where the operator 20 is performing the work on the work target 500, the CPU 21a may display the transition reception display 538 while making it such that the operator 20 cannot respond to the transition reception display 538.

### [Display of Transition Reception Display Corresponding to Physical Feature of Operator]

As described above, in the present exemplary embodiment, in a case where the operator 20 is not performing the work on the work target 500, the transition reception display 538 is displayed in an overlapping manner on the body of the operator 20, more specifically, the hand 20h of the operator 20.

Here, in a case where the transition reception display 538 is displayed in an overlapping manner on the body of the operator 20, the CPU 21a may change a display mode of the transition reception display 538 according to the features of the body of the operator 20.

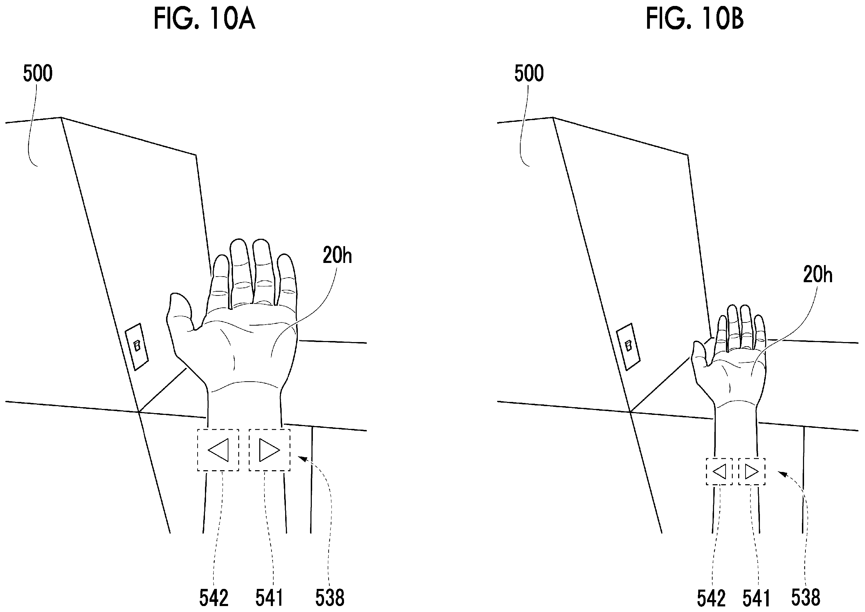

FIGS. 10A and 10B are diagrams showing display examples of transition reception displays 538 changed according to features of the body of the operator 20.

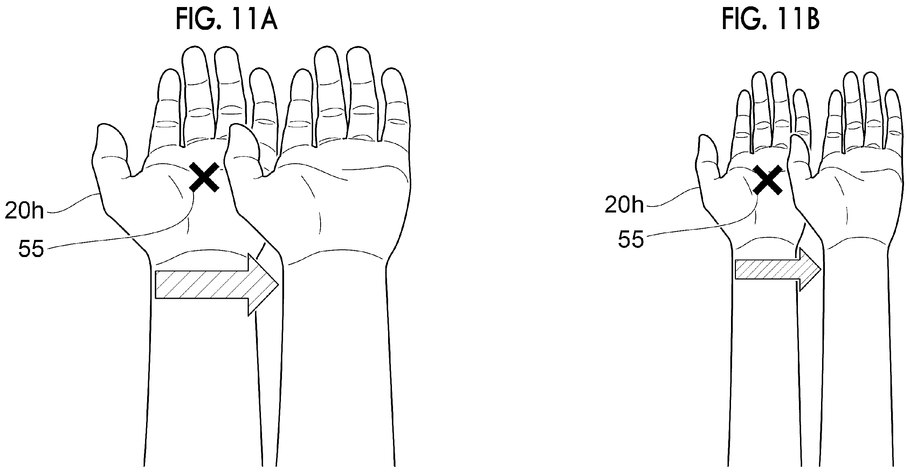

In addition, FIGS. 11A and 11B are diagrams showing operation examples of the operator 20 in a case of responding to the transition reception display 538.

Here, as the features of the body of the operator 20, a case where the display mode of the transition reception display 538 is changed according to the size (thickness of the arm) of the hand 20h of the operator 20 will be described as an example.

As shown in FIGS. 10A and 10B, the CPU 21a increases the size of the transition reception display 538 as the hand 20h of the operator 20 is larger. Alternatively, the CPU 21a may cause the transition reception display 538 to be visible on the front side as the hand 20h of the operator 20 is larger.

A case where the operator 20 responds to the transition reception display 538 through an operation of moving the hand 20h to the right side or the left side is considered.

As described above, the CPU 21a specifies that the operator 20 has responded to the transition reception display 538, based on the position of the hand 20h and the movement of the hand 20h appearing in the video obtained by the device camera 214. For example, as shown in FIGS. 11A and 11B, the CPU 21a determines a reference point 55 based on the coordinate value located on the inner side of the hand 20h before movement. Then, in a case where the operator 20 moves the hand 20h to the right or the left and the hand 20h is moved to a position where the hand 20h does not overlap the reference point 55, the CPU 21a specifies that the operator has responded to the transition reception display 538.

In this case, as shown in FIGS. 11A and 11B, a distance required to move the hand 20h to a position that does not overlap with the reference point is longer as the hand 20h of the operator 20 is larger.

Usually, the operator 20 who responds to the transition reception display 538 often moves the hand 20h in accordance with the displayed transition reception display 538. That is, the larger the size of the transition reception display 538, the longer the distance that the operator 20 moves the hand 20h, and the smaller the size of the transition reception display 538, the shorter the distance that the operator 20 moves the hand 20h.

In the present exemplary embodiment, as the hand 20h of the operator 20 is larger, the size of the transition reception display 538 is displayed to be larger, so that the operator 20 is more likely to move the hand 20h to match the transition reception display 538. Then, the CPU 21a can easily receive the response to the transition reception display 538 through the operation of the hand 20h by the operator 20.

In addition, in a case where the transition reception display 538 is displayed in an overlapping manner on the body of the operator 20, the CPU 21a may change the color of the transition reception display 538 according to the color of the body of the operator 20 (for example, the color of the clothes, the color of the skin, and the like) as the features of the body of the operator 20.

In a case where the transition reception display 538 is displayed in an overlapping manner on the body of the operator 20, in a case where the color of the body of the operator 20 is similar to the color of the transition reception display 538, the visibility of the transition reception display 538 is lowered, and it is difficult for the operator 20 to respond to the transition reception display 538. In a case where the transition reception display 538 is displayed in an overlapping manner on the body of the operator 20, the CPU 21a changes the transition reception display 538 to a color having high visibility according to the color of the body of the operator 20. As a result, difficulty in responding to the transition reception display 538 is suppressed.

Although the exemplary embodiments of the present invention have been described above, the technical scope of the present invention is not limited to the scope described in the above-described exemplary embodiments. It is evident from the description of the claims that various modifications or improvements made to the above-described exemplary embodiments are also included within the technical scope of the present invention.

The present invention can also be applied to a program and a program product.

### <Supplementary Note>

(((1))) A control device comprising:
   a processor,
   wherein the control device controls a display device that displays an image appearing within a field of view of an operator who performs work on a work target existing in a real space, and
   the processor is configured to:
      display a transition reception display that is a display for receiving, from the operator, an indication of a transition of the operator to work in a different order and limit reception of the transition reception display in a case where the operator is performing the work on the work target.
(((2))) The control device according to (((1))), wherein the processor is configured to:
   set the transition reception display to a state of low visibility for the operator in a case where the operator is performing the work on the work target, as compared with a case where the operator is not performing the work.
(3) The control device according to (((2))), wherein the processor is configured to:
   not display the transition reception display in a case where the operator performs the work on the work target.
(((4))) The control device according to (((1))), wherein the processor is configured to:
   set the transition reception display to a state of low operability for the operator in a case where the operator is performing the work on the work target, as compared with a case where the operator is not performing the work.
(((5))) The control device according to any one of (((1))) to (((4))), wherein the processor is configured to:
   display the transition reception display in a state in which the reception is not limited in a case where the operator is not performing the work on the work target.
(((6))) The control device according to (((5))), wherein the processor is configured to:
   display the transition reception display in a state in which the reception is not limited in a case where the operator performs a first operation that is a predetermined operation.
(((7))) The control device according to (((6))), wherein the processor is configured to:
   set an operation that differs depending on the operator as the first operation, and display the transition reception display in a state in which the reception is enabled in a case where the operator performs the first operation.
(((8))) The control device according to (((6))), wherein the processor is configured to:
   set an operation that differs depending on a content of the work as the first operation, and display the transition reception display in a state in which the reception is enabled in a case where the operator performs the first operation.
(((9))) The control device according to any one of (((1))) to (((8))), wherein the processor is configured to:
   display at least a part of the transition reception display in an overlapping manner on a body of the operator.
(((10))) The control device according to (((9))), wherein the processor is configured to:
   change a mode of the transition reception display according to a feature of the body of the operator.
(((11))) The control device according to (((10))),
   wherein the transition reception display is a display for performing the reception in a case where the operator performs a second operation that is an operation of moving the body, and
   the processor is configured to:
      change a size of the transition reception display according to a size of the body of the operator.
(((12))) A display system comprising:
   a display device that displays an image appearing in a field of view of a subject; and
   a control device that controls the display device,
   wherein the control device includes a configuration of the control device according to any one of (((1))) to (((11))).
(((13))) A program executed by a computer that controls a display device that displays an image appearing within a field of view of an operator who performs work on a work target existing in a real space, the program causing the computer to realize:
   a function of displaying a transition reception display that is a display for receiving, from the operator, an indication of a transition of the operator to work in a different order and of limiting reception of the transition reception display in a case where the operator is performing the work on the work target.

With the control device according to (((1))), it is possible to suppress a decrease in the work efficiency of the operator, as compared with a case where a reception display is displayed in a state where reception of the transition to work in a different order is not limited in a case where the operator is performing work on the work target.

With the control device according to (((2))), it is possible to suppress the work on the work target from being hindered by the transition reception display, as compared with a case where the transition reception display is not set to a state of low visibility in a case where the operator is performing the work on the work target.

With the control device according to (((3))), it is possible to suppress the work on the work target from being hindered by the transition reception display, as compared with a case where the transition reception display is displayed in a case where the operator is performing the work on the work target.

With the control device according to (((4))), the reception through the transition reception display is suppressed at a timing that is not intended by the operator, as compared with a case where the transition reception display is not set to a state of low operability in a case where the operator is performing the work on the work target.

With the control device according to (((5))), the burden on the operator in a case where the operator responds to the transition reception display is reduced as compared with a case where the transition reception display is displayed in a state in which the reception is limited in a case where the operator is not performing the work on the work target.

With the control device according to (((6))), it is possible to display the transition reception display according to the operation of the operator.

With the control device according to (((7))), the burden on the operator in a case of responding to the transition reception display is reduced, as compared with a case where the same operation is set as the first operation regardless of the operator.

With the control device according to (((8))), the burden on the operator in a case of responding to the transition reception display is reduced, as compared with a case where the same operation is set as the first operation regardless of the content of the work.

With the control device according to (((9))), the burden on the operator in a case of responding to the transition reception display is reduced, as compared with a case where the transition reception display is displayed in a manner that does not overlap the body of the operator.

With the control device according to (((10))), the burden on the operator in a case of responding to the transition reception display is reduced, as compared with a case where the mode of the transition reception display is not changed according to the feature of the body of the operator.

With the control device according to (((11))), it is easy to receive the response to the transition reception display, as compared with a case where the size of the transition reception display is not changed according to the size of the body of the operator.

With the display system according to (((12))), it is possible to suppress a decrease in the work efficiency of the operator, as compared with a case where a reception display is displayed in a state where reception of the transition to work in a different order is not limited in a case where the operator is performing work on the work target.

With the program according to (((13))), it is possible to suppress a decrease in the work efficiency of the operator, as compared with a case where a reception display is displayed in a state where reception of the transition to work in a different order is not limited in a case where the operator is performing work on the work target.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: information processing system
20: operator
200: individual device
211: control device
217: display device
300: management server
400: communication line
500: work target
510: work location
530: corresponding image
532: work content image
538: transition reception display

## Claims

1. A control device comprising:
a processor,
wherein the control device controls a display device that displays an image appearing within a field of view of an operator who performs work on a work target existing in a real space, and
the processor is configured to:
display a transition reception display that is a display for receiving, from the operator, an indication of a transition of the operator to work in a different order and limit reception of the transition reception display in a case where the operator is performing the work on the work target.

2. The control device according to claim 1, wherein the processor is configured to:
set the transition reception display to a state of low visibility for the operator in a case where the operator is performing the work on the work target, as compared with a case where the operator is not performing the work.

3. The control device according to claim 2, wherein the processor is configured to:
not display the transition reception display in a case where the operator performs the work on the work target.

4. The control device according to claim 1, wherein the processor is configured to:
set the transition reception display to a state of low operability for the operator in a case where the operator is performing the work on the work target, as compared with a case where the operator is not performing the work.

5. The control device according to any one of claims 1 to 4, wherein the processor is configured to:
display the transition reception display in a state in which the reception is not limited in a case where the operator is not performing the work on the work target.

6. The control device according to claim 5, wherein the processor is configured to:
display the transition reception display in a state in which the reception is not limited in a case where the operator performs a first operation that is a predetermined operation.

7. The control device according to claim 6, wherein the processor is configured to:
set an operation that differs depending on the operator as the first operation, and display the transition reception display in a state in which the reception is enabled in a case where the operator performs the first operation.

8. The control device according to claim 6, wherein the processor is configured to:
set an operation that differs depending on a content of the work as the first operation, and display the transition reception display in a state in which the reception is enabled in a case where the operator performs the first operation.

9. The control device according to any one of claims 1 to 8, wherein the processor is configured to:
display at least a part of the transition reception display in an overlapping manner on a body of the operator.

10. The control device according to claim 9, wherein the processor is configured to:
change a mode of the transition reception display according to a feature of the body of the operator.

11. The control device according to claim 10,
wherein the transition reception display is a display for performing the reception in a case where the operator performs a second operation that is an operation of moving the body, and
the processor is configured to:
change a size of the transition reception display according to a size of the body of the operator.

12. A display system comprising:
a display device that displays an image appearing in a field of view of a subject; and
a control device that controls the display device,
wherein the control device includes a configuration of the control device according to any one of claims 1 to 11.

13. A program executed by a computer that controls a display device that displays an image appearing within a field of view of an operator who performs work on a work target existing in a real space, the program causing the computer to realize:
a function of displaying a transition reception display that is a display for receiving, from the operator, an indication of a transition of the operator to work in a different order and of limiting reception of the transition reception display in a case where the operator is performing the work on the work target.

14. A control method comprising:
displaying a transition reception display that is a display for receiving, from an operator, an indication of a transition of the operator to work in a different order and limiting reception of the transition reception display in a case where the operator is performing the work on the work target.

## Amended claims

### Amended claims in accordance with Rule 137(2) EPC.

1. A control device (211) comprising:
a processor (21a),
wherein the control device (211) controls a display device (217) that displays an image appearing within a field of view of an operator (20) who performs work on a work target (500) existing in a real space, and
the processor (21a) is configured to:
display a transition reception display (538) that is a display for receiving, from the operator (20), an indication of a transition of the operator (20) to work in a different order and limit reception of the transition reception display (538) in a case where the operator (20) is performing the work on the work target (500),
**characterized in that** the processor of the control device (211) is further configured to:
set the transition reception display (538) to a state of low visibility for the operator (20) in a case where the operator (20) is performing the work on the work target (500), as compared with a case where the operator (20) is not performing the work,
wherein the transition reception display (538) includes a next button (541) and a back button (542), wherein the next button (541) is a display for receiving the transition to a next work in order from the operator (20) as the work in a different order.

2. The control device (211) according to claim 1, wherein the processor (21a) is configured to:
not display the transition reception display (538) in a case where the operator (20) performs the work on the work target (500).

3. The control device (211) according to claim 1, wherein the processor (21a) is configured to:
set the transition reception display (538) to a state of low operability for the operator (20) in a case where the operator (20) is performing the work on the work target (500), as compared with a case where the operator (20) is not performing the work.

4. The control device (211) according to any one of claims 1 to 3, wherein the processor (21a) is configured to:
display the transition reception display (538) in a state in which the reception is not limited in a case where the operator (20) is not performing the work on the work target (500).

5. The control device (211) according to claim 4, wherein the processor (21a) is configured to:
display the transition reception display (538) in a state in which the reception is not limited in a case where the operator (20) performs a first operation that is a predetermined operation.

6. The control device (211) according to claim 5, wherein the processor (21a) is configured to:
set an operation that differs depending on the operator (20) as the first operation, and display the transition reception display (538) in a state in which the reception is enabled in a case where the operator (20) performs the first operation.

7. The control device (211) according to claim 5, wherein the processor (21a) is configured to:
set an operation that differs depending on a content of the work as the first operation, and display the transition reception display (538) in a state in which the reception is enabled in a case where the operator (20) performs the first operation.

8. The control device (211) according to any one of claims 1 to 7, wherein the processor (21a) is configured to:
display at least a part of the transition reception display (538) in an overlapping manner on a body (20h) of the operator (20).

9. The control device (211) according to claim 8, wherein the processor (21a) is configured to:
change a mode of the transition reception display (538) according to a feature of the body (20h) of the operator (20).

10. The control device (211) according to claim 9,
wherein the transition reception display (538) is a display for performing the reception in a case where the operator (20) performs a second operation that is an operation of moving the body (20h), and
the processor (21a) is configured to:
change a size of the transition reception display (538) according to a size of the body (20h) of the operator (20).

11. A display system (1) comprising:
a display device (217) that displays an image appearing in a field of view of a subject (20); and
a control device (211) that controls the display device (217),
wherein the control device (211) includes a configuration of the control device (211) according to any one of claims 1 to 10.

12. A program executed by a computer that controls a display device (217) that displays an image appearing within a field of view of an operator (20) who performs work on a work target (500) existing in a real space, the program causing the computer to realize:
a function of displaying a transition reception display (538) that is a display for receiving, from the operator (20), an indication of a transition of the operator (20) to work in a different order and of limiting reception of the transition reception display (538) in a case where the operator (20) is performing the work on the work target (500),
the program is **characterized by** further comprising:
a function of setting the transition reception display (538) to a state of low visibility for the operator (20) in a case where the operator (20) is performing the work on the work target (500), as compared with a case where the operator (20) is not performing the work,
wherein the transition reception display (538) includes a next button (541) and a back button (542), wherein the next button (541) is a display for receiving the transition to a next work in order from the operator (20) as the work in a different order.

13. A control method comprising:
displaying a transition reception display (538) that is a display for receiving, from an operator (20), an indication of a transition of the operator (20) to work in a different order and limiting reception of the transition reception display (538) in a case where the operator (20) is performing the work on the work target (500),
the control method is **characterized by** further comprising:
setting the transition reception display (538) to a state of low visibility for the operator (20) in a case where the operator (20) is performing the work on the work target (500), as compared with a case where the operator (20) is not performing the work,
wherein the transition reception display (538) includes a next button (541) and a back button (542), wherein the next button (541) is a display for receiving the transition to a next work in order from the operator (20) as the work in a different order.
